# EUROPEAN PATENT APPLICATION

(11) **EP 4 629 433 A1**
(43) Date of publication of application: **08.10.2025**
(21) Application number: 24738677.4
(22) Date of filing: 02.01.2024
(51) Int. Cl.: H01M 50/593, H01M 50/588, H01M 50/242, H01M 50/503, H01M 50/211

(54) **BATTERY MODULE**

(30) Priority: 02.01.2023 KR 20230000189
(71) Applicant: LG Energy Solution, Ltd., Seoul 07335 (KR)
(72) Inventor: KIM, Seong Wook, Daejeon 34122 (KR); KIM, Chang Ho, Daejeon 34122 (KR); KIM, Hyun Sung, Daejeon 34122 (KR); JUNG, Jae Min, Daejeon 34122 (KR); KIM, Hyun Jin, Daejeon 34122 (KR)
(74) Representative: Plasseraud IP
(86) International application number: PCT/KR2024/000056
(87) International publication number: WO 2024/147606

(57) **Abstract**

A battery module according to an embodiment of the present invention may include: a module frame; a plurality of battery cells, each of which is accommodated in the module frame and includes an electrode lead; a busbar frame which is disposed on one side of the plurality of battery cells and on which a busbar connected to the electrode lead is mounted; and a stopper which is disposed between the plurality of battery cells and the busbar frame, and provided to absorb an impact applied to the battery cells. The stopper may include: an exterior having an elastic material or a spongy material; and an impact absorbing member disposed inside the exterior.

## Description

### TECHNICAL FIELD

### CROSS-REFERENCE TO RELATED APPLICATION

The present application claims the benefit of the priority of Korean Patent Application No. 10-2023-0000189, filed on January 2, 2023, which is hereby incorporated by reference in its entirety.

### TECHNICAL FIELD

The present invention relates to a battery module including a plurality of battery cells.

### BACKGROUND ART

In general, a lithium-ion secondary battery is manufactured by applying electrode active material slurry onto a positive electrode current collector and a negative electrode current collector to manufacture a positive electrode and a negative electrode, stacking the positive electrode and the negative electrode on both sides of a separator to form an electrode assembly having a predetermined shape, and then accommodating the electrode assembly in a pouch and injecting an electrolyte into the pouch.

According to the material of a case that accommodates the electrode assembly, secondary batteries are classified into a pouch type, a can type, and the like. Among the secondary batteries, a pouch type secondary battery is manufactured by performing press processing on a pouch film stack having flexibility to form a cup part, and accommodating an electrode assembly in the cup part to inject an electrolyte, and then sealing a sealing part. And a can type secondary battery is manufactured by accommodating an electrode assembly in a can made of a metal material, injecting an electrolyte, and then assembling a top cap with an upper portion of the can, followed by sealing.

The pouch type secondary battery has advantages of having a small weight, being superior in space utilization, and using stack type electrode assemblies to achieve a high energy density, but have a disadvantage of being susceptible to an external impact compared to the can type secondary battery. Recently, as usage environment of the secondary batteries is diversified, the secondary batteries are required to have superior safety even in harsh environment. Accordingly, there is a need for improvement in impact resistance of the pouch type secondary battery.

In particular, the pouch type secondary battery is generally stacked in plurality to be used as a battery module rather than being used alone. Thus, there is a need for a structure for improvement in impact resistance of the pouch type secondary battery at battery module level.

### DISCLOSURE OF THE INVENTION

### TECHNICAL PROBLEM

An object of the present invention for solving the above problems is to provide a battery module in which separation of an electrode assembly and/or a leak of an electrolyte from a battery cell are suppressed upon an external impact.

### TECHNICAL SOLUTION

A battery module according to an embodiment of the present invention may include: a module frame; a plurality of battery cells, each of which is accommodated in the module frame and includes an electrode lead; a busbar frame which is disposed on one side of the plurality of battery cells and on which a busbar connected to the electrode lead is mounted; and a stopper which is disposed between the plurality of battery cells and the busbar frame, and provided to absorb an impact applied to the battery cells. The stopper may include: an exterior having an elastic material or a spongy material; and an impact absorbing member disposed inside the exterior.

When the battery cells collide with the stopper, the stopper may be elastically deformed.

The stopper may be provided in plurality to be disposed at fixed intervals in a direction in which the plurality of battery cells are stacked. Each of the stoppers may have one portion facing one battery cell, and another portion facing the other battery cell adjacent to the one battery cell.

The stopper may extend in a full-width direction of the battery cell.

The stopper may be provided to be convex toward the plurality of battery cells.

The stopper may be coupled to the busbar frame.

The stopper may be provided in plurality to be disposed at fixed intervals in a direction in which the plurality of battery cells are stacked. A plurality of slits, each of which is opened toward a gap between the plurality of stoppers and through which the electrode leads pass, may be defined in the busbar frame.

A length of the stopper may be greater to a length of the slit.

A length of the stopper may correspond to a full-length of the battery cell.

The impact absorbing member may be a rupture member that is irreversibly ruptured by an impact.

The rupture member may have a zigzag shape so as to cross a virtual line parallel to a full-length direction of the battery cell multiple times.

The impact absorbing member may be an elastic member that is compressed by an impact.

The elastic member may be a spring that is elastically deformed in a direction parallel to a full-length direction of the battery cell.

The impact absorbing member may be provided in plurality to be spaced a predetermined gap from each other in a longitudinal direction of the stopper.

### ADVANTAGEOUS EFFECTS

According to the preferred embodiments of the present invention, the stopper may absorb the impact applied to the battery cell. Accordingly, the concern that the sealing part of the battery cell is damaged or punctured upon the external impact may be reduced, and the separation of the electrode assembly and/or the leak of the electrolyte may be suppressed to achieve the superior impact resistance.

In addition, the effects may be included which are easily predictable by those skilled in the art from the configurations according to the preferred embodiments of the present invention.

### BRIEF DESCRIPTION OF THE DRAWINGS

The following drawings attached in this specification illustrate preferred embodiments of the present invention and function to make further understood the technical spirit of the present invention along with the detailed description of the invention. Thus, the present invention should not be construed as being limited by only the embodiments illustrated in the drawings.
FIG. 1 is a perspective view of a battery module according to an embodiment of the present invention.
FIG. 2 is an exploded perspective view of a battery module according to an embodiment of the present invention.
FIG. 3 is a front view of a battery cell according to an embodiment of the present invention.
FIG. 4 is a partially enlarged perspective view illustrating a portion of a battery cell stack and a busbar frame illustrated in FIG. 3.
FIG. 5 is a perspective view of the busbar frame illustrated in FIG. 4 when viewed in a different direction.
FIG. 6 is a cross-sectional view illustrating a stopper and surrounding components together according to an embodiment of the present invention.
FIG. 7 is a schematic view of a stopper according to an embodiment of the present invention.
FIG. 8 is a schematic view of a stopper according to another embodiment of the present invention.
FIG. 9 is a schematic view of a stopper according to still another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. In assigning reference numerals to elements in each drawing in this specification, like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

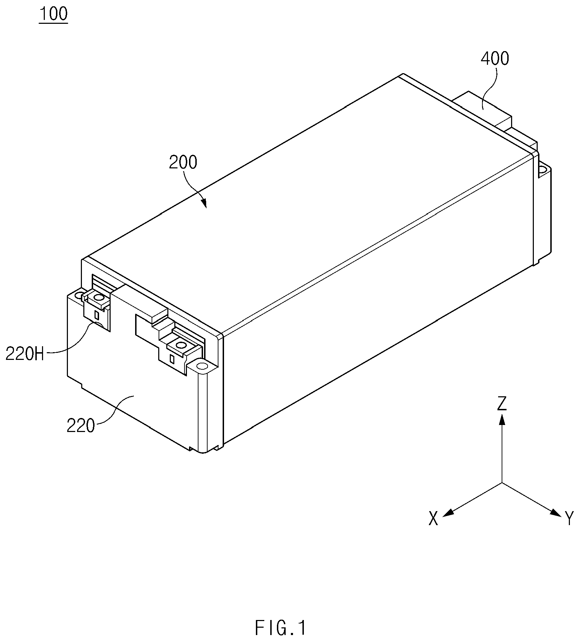

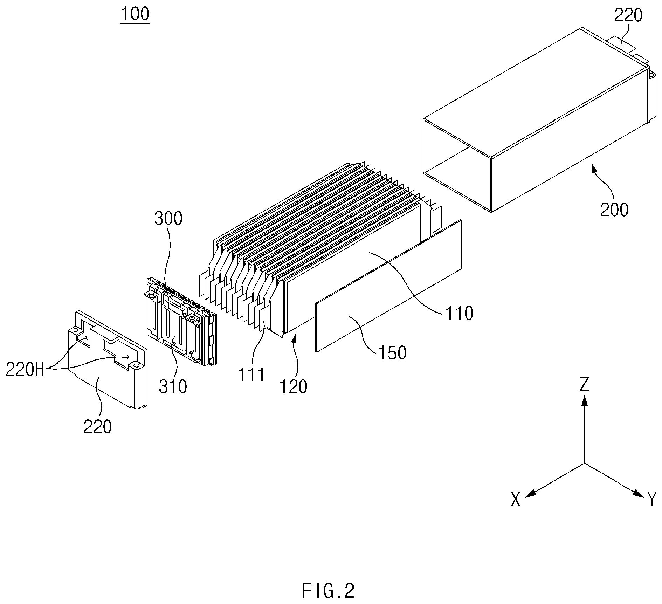

FIG. 1 is a perspective view of a battery module according to an embodiment of the present invention. FIG. 2 is an exploded perspective view of a battery module according to an embodiment of the present invention.

A battery module 100 according to a first embodiment of the present invention may include a plurality of battery cells 110, a module frame 200, and a busbar frame 300.

The plurality of battery cells 110 may be accommodated in the module frame 200. The plurality of battery cells 110 may be disposed to be parallel to each other. The plurality of battery cells 110 may be disposed to face each other in a first direction (e.g., direction parallel to an Y axis). In more detail, the plurality of battery cells 110 may be stacked on each other in the first direction. In addition, each of the battery cells 110 may be disposed to extend in a second direction (e.g., direction parallel to an X axis) perpendicular to the first direction. The first direction may be a direction parallel to a full-width direction of the module frame 200 to be described later, and the second direction may be a direction parallel to a full-length direction of the module frame 200.

Each of the battery cells 110 may be a pouch type battery cell. In the pouch type battery cell, the number of stacked battery cells per unit area may be maximized, and thus an energy density of the battery module 100 may be increased. The battery cell 110 provided in pouch type may be manufactured by accommodating an electrode assembly, which includes a positive electrode, a negative electrode, and a separator, in a cell case into which a laminate sheet is molded, and then sealing the cell case by thermal fusion. However, the battery cell 110 may not be necessarily provided in pouch type, and may be provided in other various shapes such as a polygonal shape or a cylindrical shape, at a level at which storage capacity required by a device to be mounted later is accomplished.

Each of the battery cells 110 may include an electrode lead 111. The electrode lead 111 may be provided in pair to protrude in opposite directions to each other, and the pair of electrode leads 111 may protrude to be parallel to a longitudinal direction of the battery cell 110. However, the present invention is not limited thereto, and the pair of electrode leads 111 may protrude to be parallel to each other in the same direction.

The plurality of battery cells 110 stacked on each other may provide a battery cell stack 120. In addition, the battery cell stack 120 may include at least one heat dissipating pad 150 that dissipates heat from the battery cell 110. The heat dissipating pad 150 may be disposed between the plurality of battery cells 110, or may be disposed to cover the outermost battery cell 110.

The module frame 200 may provide an outer appearance of the battery module 100. The module frame 200 may have a metal material having high strength.

The module frame 200 may have various structures. As one example, the module frame 200 may be a mono-frame. The mono-frame may be a metal plate in which a top surface, a bottom surface, and both side surfaces are integrated. As another example, the module frame 200 may have a structure in which a U-shaped frame and an upper plate (top surface) are coupled to each other. The U-shaped frame may be a metal plate in which a lower plate (bottom surface) and side plates (side plates) are coupled to or integrated with each other. In addition, the structure of the module frame 200 may be provided as a structure, in which L-shaped frames are coupled to each other, and may be provided as various structures that are not described in the foregoing examples.

The module frame 200 may have an inner space, and the battery cell stack 120 may be accommodated in the inner space. In more detail, the module frame 200 may include a top surface, a bottom surface, and both side surfaces. In the module frame 200, each of both ends of the module frame 200 in the full-length direction may be opened, and may be covered by an end plate 220 to be described later.

A plurality of vent holes (not shown) may be defined in one surface of the module frame 200, preferably in the top surface. When ignition occurs in the battery cell 110 in the module frame 200, gases and flames are rapidly discharged through the vent holes.

The busbar frame 300 may be disposed on each of both sides of the battery cell stack 120 in a full-length direction. At least one busbar 310 may be mounted on the busbar frame 300, and each of the busbars 310 may be connected to the electrode lead 111 of the battery cell 110. The busbar 310 may be a component that electrically connects the plurality of battery cells 110 to an external device.

The battery module 100 may further include an end plate 220.

The end plate 220 may be disposed outside the busbar frame 300. That is, the busbar frame 300 may be disposed between the battery cell stack 120 and the end plate 220.

The end plate 220 may be coupled to the module frame 200. The end plate 220 may cover each of both opened ends of the module frame 200. An opening 220H may be defined in the end plate 220, and an electrical connection of the busbar 310 may be achieved through the opening 220H. That is, the busbar 310 of one battery module 100 may be electrically connected to another battery module 100 or a battery disconnect unit (BDU) through the opening 220H.

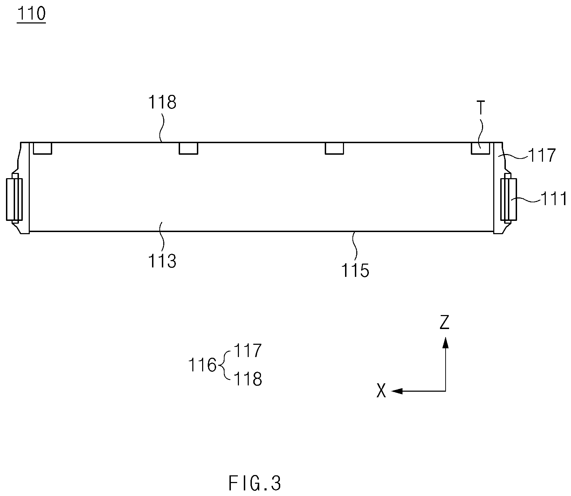

FIG. 3 is a front view of a battery cell according to an embodiment of the present invention.

As described above, the battery cell 110 may be manufactured by accommodating an electrode assembly in a cell case, and then sealing the cell case by thermal fusion. The cell case may be a pouch type battery case manufactured by molding a laminate sheet.

In more detail, the cell case may include an accommodation part 113 in which the electrode assembly is accommodated, and a sealing part 116 disposed around the accommodation part 113. In more detail, the cell case may include a pair of cases connected through a bridge 115. The accommodation part 113 may be recessed and molded in at least one of the pair of cases, and an area around the accommodation part 113 may provide a terrace. When the bridge 115 is folded in a state in which the electrode assembly is accommodated in the accommodation part 113, the terraces of the pair of cases may be sealed at three sides. That is, the terraces of the pair of cases may be sealed by thermal fusion in a state of being in contact with each other so as to provide the sealing part 116. However, the present invention is not limited thereto, and the pair of cases may be separate members from each other without being connected through the bridge 115. In this case, the terraces of the pair of cases may be in contact with each other, and may be sealed at four sides by thermal fusion and provide the sealing part 116. This configuration of this cell case corresponds to the well-known technique, and thus could be easily understood by those skilled in the art.

The sealing part 116 of the cell case may include a pair of first sealing parts 117 that are disposed on both sides of the accommodation part 113 in a full-length direction, respectively, and a second sealing part 118 that connects the pair of first sealing parts 117 to each other and is disposed on one side of the accommodation part 113 in a full-width direction.

The electrode lead 111 may protrude to the outside of the cell case through the first sealing parts 117. That is, the second sealing part 118 may be a portion from which the electrode lead 111 does not protrude.

In order to increase an energy density of the battery cell 110, the second sealing part 118 may be folded at least once. The second sealing part 118 may be double side folded (DSF).

Each of the first sealing parts 117 may extend approximately in a full-width direction of the battery cell 110. The second sealing part 118 may extend approximately in a full-length direction of the battery cell 110. The second sealing part 118 may be disposed at an opposite side of the bridge 115.

The battery cell 110 may include at least one fixing member T that fixes the second sealing part 118 in a state in which the second sealing part 118 is folded. For example, the fixing member T may be an adhesive tape.

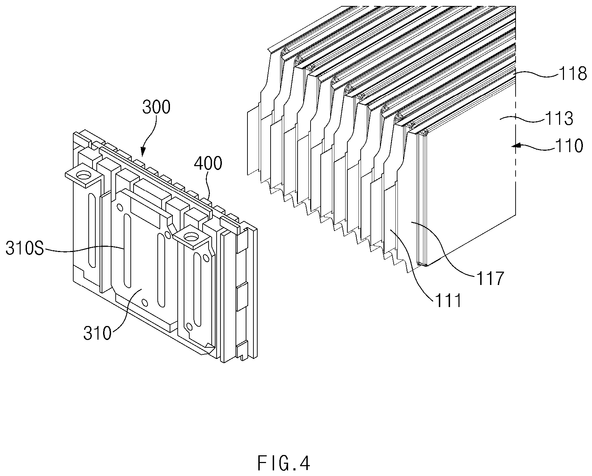

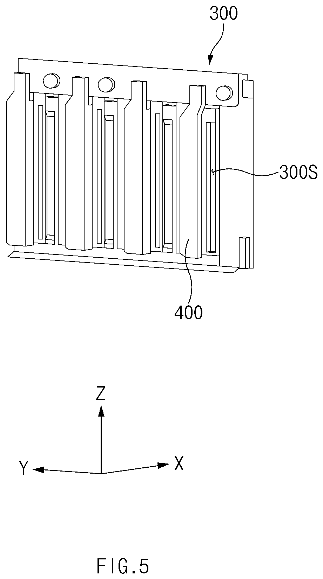

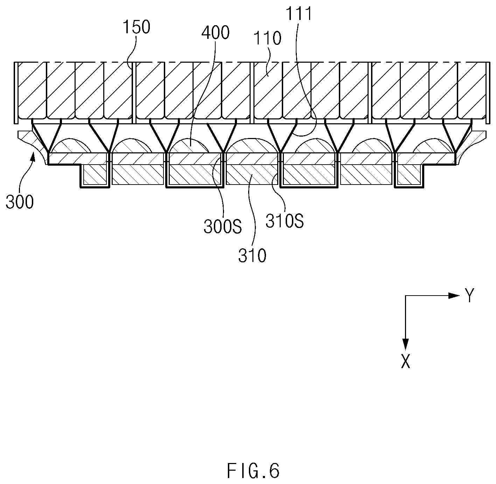

FIG. 4 is a partially enlarged perspective view illustrating a portion of a battery cell stack and a busbar frame illustrated in FIG. 3. FIG. 5 is a perspective view of the busbar frame illustrated in FIG. 4 when viewed in a different direction. FIG. 6 is a cross-sectional view illustrating a stopper and surrounding components together according to an embodiment of the present invention.

Recently, as a demand for batteries that require large capacity like batteries for electric vehicles increases, rated capacity of a pouch type secondary battery increases. Accordingly, a size and a weight of the electrode assembly are on an increasing trend. However, as the size and the weight of the electrode assembly increase, a phenomenon, in which when an external impact is applied, the electrode assembly damages the cell case while moving, or passes through the cell case, is exacerbated. When these damages to the cell cases occur, an electrolyte may leak or the electrode assembly may be deformed to cause serious problems in terms of performance and safety of the battery.

In particular, since the second sealing part 118 of the sealing part 116 of the cell case has a long length, is folded at least once, and is attached with the fixing member T, concern that the second sealing part 118 is damaged or punctured may be relatively small. On the other hand, the first sealing part 117 has a small length, and thus impulsive force per unit length applied by the electrode assembly may be great, and since the first sealing part 117 is a portion from which electrode lead 111 protrudes, concern that the first sealing part 117 is damaged or punctured may be relatively great.

In order to resolve the problems that the electrode assembly of the battery cell 10 is displaced from a fixed position due to an external impact to cause the sealing part 116 of the cell case, particularly the first sealing part 117, to be damaged or punctured, the battery module 100 according to an embodiment of the present invention may include a stopper 400 provided to absorb an impact applied to the battery cell 10. When the battery cell 10 collides with the stopper 400, the stopper 400 may absorb an impact while being elastically deformed.

The stopper 400 may be disposed between the busbar frame 300 and the plurality of battery cells 10.

The stopper 400 may be coupled to the busbar frame 300. In more detail, the stopper 400 may be coupled to an inner side of the busbar frame 300, and the busbars 310 may be coupled to an outer side of the busbar frame 300. Accordingly, the stopper 400 may be installed at an accurate position on one side of the plurality of battery cells 110 in a state of being coupled to the busbar frame 300.

The stopper 400 may be in contact with the battery cell 110. The stopper 400 may absorb an impact applied to the battery cell 110 in a state of being in contact with the battery cell 110.

Alternatively, the stopper 400 may be spaced a predetermined gap from the battery cell 110 in the full-length direction of the battery cell 110, i.e., in the second direction (e.g., direction parallel to the X axis). In this case, when an impact is applied to the battery cell 110, the battery cell 110 may collide with the stopper 400, and the stopper 400 may absorb the impact.

The stopper 400 may extend in the full-width direction of the battery cell 110. That is, the stopper 400 may have a bar shape that is elongated in a third direction (e.g., direction parallel to a Z axis) parallel to the full-width direction of the battery cell 110.

In addition, a length of the stopper 400 may correspond to a full-width of the battery cell 110. That is, the length of the stopper 400 may be the same as or similar to the full-width of the battery cell 110. In addition, the length of the stopper 400 may be greater than a length of a slit 300S defined in the busbar frame 300. Accordingly, the stopper 400 may entirely absorb an impact with respect to the full-width direction of the battery cell 110.

The stopper 400 may be provided in plurality to be disposed at fixed intervals in a direction in which the plurality of battery cells 110 are stacked, and which is the first direction (e.g., direction parallel to a Y axis).

Each of the stoppers 400 may have one portion facing one battery cell 110, and another portion facing the other battery cell 110 adjacent to the one battery cell 110. The stopper 400 may be provided to be convex toward the plurality of battery cells 110. Accordingly, the electrode lead 111 of each of the battery cells 110 may be easily introduced between the plurality of stoppers 400, and an impact applied to the battery cells 110 may be stably absorbed.

A plurality of slits 300S, each of which is opened toward a gap between the plurality of stoppers 400 and through which the electrode leads 111 pass, may be defined in the busbar frame 300. In addition, a slit 310S which faces the slit 300S defined in the busbar frame 300 may be defined also in the busbar 310 mounted on the busbar frame 300.

Thus, the electrode lead 111 of each of the battery cells 110 may pass through the gap between the plurality of stoppers 400, and pass through the slit 300S defined in the busbar frame 300 and the slit 310S defined in the busbar 310 in sequence so that the electrode lead 111 is welded to an outer surface of the busbar 310.

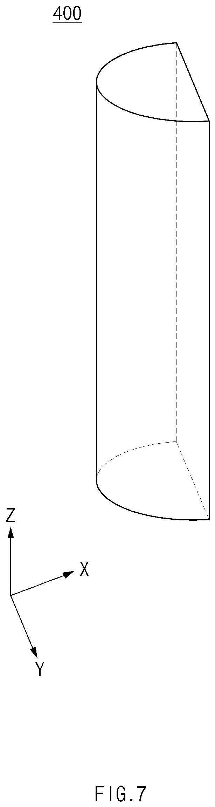

FIG. 7 is a schematic view of a stopper according to an embodiment of the present invention.

A stopper 400 according to an embodiment of the present invention may be an elastic body or a spongy body. The stopper 400 may be provided in one body. The stopper 400 may be elastically deformed, and absorb an impact applied to the battery cell 110.

The stopper 400 according to this embodiment may be advantageous in a simple structure and low manufacturing costs.

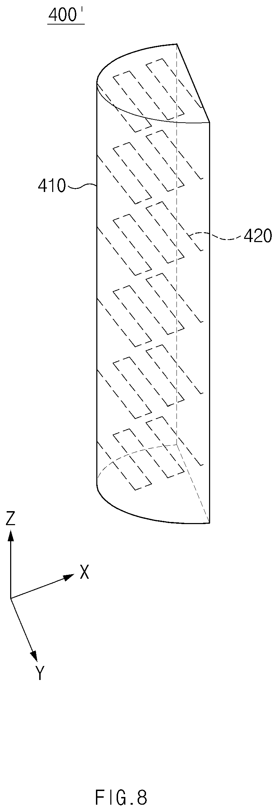

FIG. 8 is a schematic view of a stopper according to another embodiment of the present invention.

A stopper 400' according to another embodiment of the present invention may include an exterior 410 having an elastic material or a spongy material, and a rupture member 420 disposed inside the exterior 410.

The exterior 410 may be provided to be convex toward the battery cell 110. The exterior 410 may have an inner space in which the rupture member 420 is accommodated. When an impact is applied by the battery cell 110, the exterior 410 may absorb the impact while being be elastically deformed.

The rupture member 420 may be an impact absorbing member that absorb an impact while being ruptured due to an impact. As the rupture member 420 is irreversibly ruptured, counteraction or counter-resilience that is applied to the battery cell 110 by the stopper 400' may be minimized.

Any material may be used for the rupture member 420 as long as the material is ruptured and suitable for absorbing an impact, and the material is not limited. For example, the rupture member 420 may have a plastic material.

The rupture member 420 may be provided in plurality to be spaced a predetermined gap from each other in a longitudinal direction of the stopper 400'. Accordingly, an impact absorption effect of the stopper 400' may be increased.

The rupture member 420 may have a zigzag shape. In more detail, the rupture member 420 may have a zigzag shape so as to cross a virtual line L multiple times. The virtual line L may be parallel to the full-length direction of the battery cell 110, i.e., the second direction (e.g., direction parallel to the X axis). Thus, when the battery cell applies an impact to the exterior 410 in the second direction, the rupture member 420 may be reliably ruptured as a whole. Accordingly, the rupture member 420 may effectively absorb an impact applied to the battery cell 110.

In the stopper 400' according to this embodiment, as the rupture member 420 absorbs an impact while being ruptured, there are advantages that the impact absorption is great, and a counteraction applied to the battery cell 110 may be minimized.

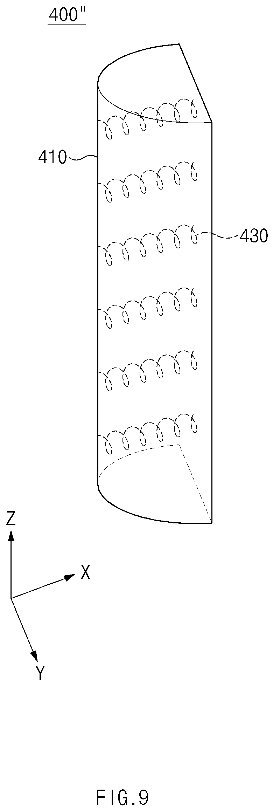

FIG. 9 is a schematic view of a stopper according to still another embodiment of the present invention.

A stopper 400" according to still another embodiment of the present invention may include an exterior 410 having an elastic material or a spongy material, and an elastic member 430 disposed inside the exterior 410.

The exterior 410 may be provided to be convex toward a battery cell 110. The exterior 410 may have an inner space in which the elastic member 430 is accommodated. When an impact is applied by the battery cell 110, the exterior 410 may absorb the impact while being elastically deformed.

The elastic member 430 may be an impact absorbing member that absorb an impact while being compressed due to an impact.

The elastic member 430 may be provided in plurality to be spaced a predetermined gap from each other in a longitudinal direction of the stopper 400". Accordingly, an impact absorption effect of the stopper 400" may be increased.

The elastic member 430 may be a spring that is elastically deformed in a direction parallel to a full-length direction of the battery cell 110. That is, the elastic member 430 may be elongated and compressed in a direction parallel to the second direction (e.g., direction parallel to the X axis).

Accordingly, the elastic member 430 may effectively absorb an impact applied to the battery cell 110. In addition, the elastic member 430 that allows a gradually decreasing counteraction applied to the battery cell 110 by the elastic member 430 may be easily designed.

In the stopper 400" according to this embodiment, as the elastic member 430 absorbs an impact while being compressed, there are advantages that the impact absorption is great, and a counteraction applied to the battery cell 110 may be gradually decreased.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 100: | Battery module | 110: | Battery cell |
| 111: | Electrode lead | 113: | Accommodation part |
| 116: | Sealing part | 117: | First sealing part |
| 118: | Second sealing part | 120: | Battery cell stack |
| 200: | Module frame | 220: | End plate |
| 300: | Busbar frame | 310: | Busbar |
| 400; | Stopper | 410: | Exterior |
| 420: | Rupture member | 430: | Elastic member |

## Claims

1. A battery module comprising:
a module frame;
a plurality of battery cells, each of which is accommodated in the module frame and comprises an electrode lead;
a busbar frame which is disposed on one side of the plurality of battery cells and on which a busbar connected to the electrode lead is mounted; and
a stopper disposed between the plurality of battery cells and the busbar frame, and configured to absorb an impact applied to the battery cells,
wherein the stopper comprises:
an exterior having an elastic material or a spongy material; and
an impact absorbing member disposed inside the exterior.

2. The battery module of claim 1, wherein, when the battery cells collide with the stopper, the stopper is elastically deformed.

3. The battery module of claim 1, wherein the stopper is provided in plurality to be disposed at fixed intervals in a direction in which the plurality of battery cells are stacked,
wherein each of the stoppers has one portion facing one battery cell, and another portion facing the other battery cell adjacent to the one battery cell.

4. The battery module of claim 1, wherein the stopper extends in a full-width direction of the battery cell.

5. The battery module of claim 1, wherein the stopper is provided to be convex toward the plurality of battery cells.

6. The battery module of claim 1, wherein the stopper is coupled to the busbar frame.

7. The battery module of claim 1, wherein the stopper is provided in plurality to be disposed at fixed intervals in a direction in which the plurality of battery cells are stacked,
a plurality of slits, each of which is opened toward a gap between the plurality of stoppers and through which the electrode leads pass, are defined in the busbar frame.

8. The battery module of claim 7, wherein a length of the stopper is greater to a length of the slit.

9. The battery module of claim 1, wherein a length of the stopper corresponds to a full-length of the battery cell.

10. The battery module of claim 1, wherein the impact absorbing member is a rupture member that is irreversibly ruptured by an impact.

11. The battery module of claim 10, wherein the rupture member has a zigzag shape so as to cross a virtual line parallel to a full-length direction of the battery cell multiple times.

12. The battery module of claim 1, wherein the impact absorbing member is an elastic member that is compressed by an impact.

13. The battery module of claim 12, wherein the elastic member is a spring that is configured to be elastically deformed in a direction parallel to a full-length direction of the battery cell.

14. The battery module of claim 1, wherein the impact absorbing member is provided in plurality to be spaced a predetermined gap from each other in a longitudinal direction of the stopper.
